Europäisches Patentamt

European Patent Office

Office européen des brevets

(11) Publication number: **0 379 747 B1**

# EUROPEAN PATENT SPECIFICATION

(45) Date of publication of patent specification: **27.10.93**  (51) Int. Cl.5: **A23D 7/00**

(21) Application number: **89203115.4**

(22) Date of filing: **07.12.89**

(54) **Spread.**

(30) Priority: **23.12.88 EP 88203001**

(43) Date of publication of application:
**01.08.90 Bulletin 90/31**

(45) Publication of the grant of the patent:
**27.10.93 Bulletin 93/43**

(84) Designated Contracting States:
**AT BE CH DE ES FR GB GR IT LI NL SE**

(56) References cited:
EP-A- 0 091 331          EP-A- 0 233 856
EP-A- 0 290 065          EP-A- 0 290 421
EP-A- 0 354 600          CA-A- 1 170 498
DD-A- 228 457            US-A- 3 939 290

(73) Proprietor: **UNILEVER N.V.**
**Weena 455**
**NL-3013 AL Rotterdam(NL)**
(84) Designated Contracting States:
**BE CH DE ES FR GR IT LI NL SE AT**

(73) Proprietor: **UNILEVER PLC**
**Unilever House**
**Blackfriars**
**P.O. Box 68**
**London EC4P 4BO(GB)**
(84) Designated Contracting States:
**GB**

(72) Inventor: **Cain, Frederick William**
**Dr Blookerstraat 12**
**NL-2271 VL Voorburg(NL)**
Inventor: **de Jong, Frederik Roelof**
**van Boisotstraat 31**
**NL-3132 XK Vlaardingen(NL)**

(74) Representative: **Dries, Antonius Johannes Maria et al**
**Unilever N.V. Patent Division**
**P.O. Box 137**
**NL-3130 AC Vlaardingen (NL)**

Rank Xerox (UK) Business Services
(3.10/3.6/3.3.1)

## Description

The present invention is concerned with a spread containing a fat phase and a continuous aqueous phase.

CA-A-1 170 498 describes a low-fat spread comprising a dispersed phase comprising from 5 to 40% triglyceride fats, based on the weight of the spread, and a continuous aqueous phase including a stabilizer and an emulsifier system comprising a combination of a lipophilic emulsifier and a hydrophillic emulsifier. According to this document the calorie content of the spread is reduced by increasing the water content. For increasing the water content it is necessary to introduce a stabilizer, which may be a gelling agent, and a particular emulsifier system into the aqueous phase.

The present invention is concerned with low fat spreads containing a fat phase comprising one or more indigestible polyol fatty acid polyesters.

Polyol fatty acid polyesters, and in particular, the sugar fatty acid polyesters, such as e.g. the sucrose fatty acid polyesters, are known (compare e.g. US 3.600.186 and EP 0 236 288) as suitable low-calorie fat-replacers in edible products, such as e.g. margarine. Substantially indigestible for human beings they have physical and organoleptic properties very similar to triglyceride oils and fats conventionally used in edible products. Polyol fatty acid polyesters are also reported to have use as pharmaceutical agents e.g. in view of their ability to take up fat-soluble substances, such as in particular cholesterol, in the gastro-intestinal tract and subsequently remove those substances from the human body (compare e.g. EP 0 236 288 and FR-A-2.254.318) Accordingly, it is attractive to replace at least part of the fat in edible fat-containing products by polyol fatty acid polyesters. It is further reported that in food products the use of polyol fatty acid polyesters which are liquid at body temperature, may give rise to the so-called problem of anal leakage, although EP 0 236 288 describes, that this problem has been overcome in margarine, by the use of the system mentioned therein.

Edible fat-containing products comprising indigestible polyol fatty acid polyesters are further described in eg U.S. Pat. Nos. 4.005.195.4.005.196.4.034.083 and EP Pat. Publ.Nos. 0 233 856 and 0 235 836. Said products, however, comprise a dispersed, i.e. discontinuous aqueous phase.

We have found that low fat spreads comprising a gelled continuous aqueous phase and a fat phase comprising one or more indigestible polyol fatty acid polyesters may have a consistency and mouthfeel that is very similar to triglyceride-based spreads of higher fat and calorie content, whereas other properties of the spreads, like waterloss, brittleness and rheology are also excellent.

Thus the present invention is concerned with spread containing a fat phase comprising one or more indigestible polyol fatty acid polyesters derived from polyol(s) comprising at least four free hydroxyl groups, wherein more than 70% of the polyol hydroxyl groups have been esterified with fatty acid(s), and optionally conventional glyceride fats and at least 40 wt % of a continuous aqueous phase containing one or more gelling agents at a sufficiently high concentration level to gel said aqueous phase.

In this specification, unless otherwise indicated, the term "fat" refers to edible fatty substances in a general sense, including natural or synthesized fats and oils consisting essentially of triglycerides such as, for example, soybean oil, sunflower oil, palm oil, coconut oil, fish oil, lard and tallow, which may have been partially or completely hydrogenated or modified otherwise, as well as non-toxic fatty materials having properties similar to triglycerides, which materials may be indigestible, such as for example waxes, e.g. jojoba oil and hydrogenated jojoba oil, and polyol fatty acid polyesters referred to hereinafter in more detail. The terms fat and oil are used interchangeably.

In the specification the term "polyol" is intended to refer to any aliphatic or aromatic compound which comprises at least four free hydroxyl groups. Such polyols in particular include the group of sugar polyols, which comprises the sugars, i.e. the mono-, di-and polysaccharides, the corresponding sugar alcohols and the derivatives thereof having at least four free hydroxyl groups. Examples of sugar polyols include glucose, mannose, galactose, xylose, fructose, sorbose, tagatose, ribulose, xylulose, maltose, lactose, cellobiose, raffinose, sucrose, erythritol, mannitol, lacitol, sorbitol, xylitol and alpha-methylglucoside. A generally used and preferred sugar polyol is sucrose.

In this specification the term "polyol fatty acid polyester" encompasses polyesters or mixtures thereof of which, on average, more than 70% of the polyol hydroxyl groups have been esterified with fatty acids. The term "indigestible" whenever used throughout this document with respect to polyol fatty acid polyesters indicates that at least about 70% by weight of the polyol fatty acid polyester material concerned is not digested by the human body.

The spreads according to the present invention offer several advantages. First in the present spreads the triglyceride and consequently the calorie content may substantially be reduced without seriously affecting the product quality. In conventional spreads, comprising a continuous fat phase and a dispersed aqueous phase, the replacement of triglycerides by either an aqueous composition or by indigestible polyol fatty acid polyesters may be accompanied by a significant loss in product quality. If the triglycerides content is lowered by increasing the water content it is necessary to adapt the aqueous phase composition and/or distribution resulting in products which tend to show product deficiencies such as water loss, a thick mouthfeel or a poor spreadability. Also if the triglycerides in conventional products are substituted by indigestible polyol fatty acid polyesters, the products obtained may exhibit deficiencies in that they are waxy and impart an excessively fatty mouthfeel, unless particular polyol fatty acid polyesters are used together with an edible, absorbable, digestible food material such as a liquid triglyceride,which act as a solvent for the polyol fatty acid polyesters (compare e.g. EP-A-0 233 856).

Moreover the present spreads offer the advantage that they destabilize quickly in the mouth and thus easily release flavour and salt upon mastication. If a spread, unlike the present spreads, comprises a dispersed aqueous phase and a continuous fat phase, the aqueous phase droplets are surrounded by a fat matrix and stabilized by triglyceride and/or polyol fatty acid polyester crystals. Only after these crystals have melted, the aqueous droplets destabilize and release their flavour and salt. In particular in conventional low fat spreads, i.e. spreads containing less than about 60 wt.% triglycerides, such destabilization of the aqueous phase droplets can be hampered by the presence of stabilizing ingredients in the aqueous and/or fat phase. In the present products, on the contrary, the flavour and salt are released from the aqueous phase immediately on mastication as the aqueous phase upon consumption comes in direct contact with the papillae.

Yet another advantageous property of the present products is that they have a good quality even when comprising a fat phase which in spreads comprising a continuous fat phase and a dispersed aqueous phase would generate serious product deficiencies. The present spreads may, for instance, contain a high level of high melting polyol fatty acid polyesters, and still break down easily in the mouth as this break down, contrary to water-in-oil spreads, is not hampered by the presence of such high melting polyesters.

Finally the spreads according to the present invention offer the advantage that the rheology of the product may be adapted by changing the composition of the aqueous phase instead of having to change the composition of the fat blend. Indeed in conventional water-in-oil spreads the rheology of the product is normally adapted by changing the processing conditions, but more often by changing the composition of the fat phase, for instance, by incorporating modified triglyceride compositions obtained by hydrogenation, fractionation and/or interesterification. In the present product the rheology may simply be adapted by using different concentration levels and/or mixing ranges of gelling agent(s). The advantageous properties of the present spreads are particularly appreciated in spreads containing 5 to 60 wt.%, preferably 6 to 45 wt.% of a fat phase. Here the fat phase may be present in the product as a dispersed phase, a continuous phase or even as a partially dispersed and partially continuous phase. Thus the present invention encompasses spreads of the oil-in-water type, bi-continuous spreads as well as intermediate forms of these two types of water and oil containing spreads.

There are several methods known in the art to assess whether a water and oil containing emulsion is water-continuous or not. One method employs a mixture of two colouring agents, called Malachite Green and Sudan™ III. Malachite Green, when contacted with water turns green whereas Sudan III when brought into contact with fat turns red. When sprinkled over a water-continuous product containing a dispersed fat-phase, this mixture of colouring agents develops a clearly perceptible green colour. In case the water-continuous product is bi-continuous both a green and red colour can be observed. When contacted with products containing no continuous aqueous phase, the powder attains a red colour.

An alternative method for determining whether a product is water-continuous, is to measure the conductivity of the product. Since the water applied in spreads always contains electrolytes, the conductivity of such aqueous phase is extremely high. Thus the conductivity of water-continuous products always is above 10 $\mu$S/cm and in fact generally above 100 $\mu$S/cm. Fat continuous products solely containing a dispersed aqueous phase, as contrasted with the present spreads, have a very low conductivity, i.e. always less than 10 $\mu$S/cm.

As stated above the continuous aqueous phase in the spread of the present invention is gelled. The ordered structure present in such a gelled aqueous phase more or less retains the water present therein and therefore serves the purpose of preventing water loss. Furthermore the gel structure to a large extent determines the rheology of the product and therefore has a serious influence on the spreadability, hardness and brittleness of the present spread.

It has been found that stable and spreadable spreads are obtained if the continuous aqueous phase comprises one or more gelling agents selected from the group consisting of: gelatin, kappa-carrageenan, iota-carrageenan, alginate, agar, gellan, pectin, gelling starch, whey protein, bovine serum protein, soy protein and microcrystalline cellulose. Spreads having a very desirable plastic rheology may be obtained if the aqueous phase comprises a first gelling agent selected from the group consisting of: gelatin, kappa-carrageenan, iota-carrageenan, alginate, agar, gellan and pectin and in addition a second gelling selected from the group consisting of: starch, whey protein, bovine serum protein, soy protein and microcrystalline cellulose.

Products having a very good oral response are obtained when the gel structure, at least partially, breaks down in the mouth. Besides by mastication such break down of the gel structure may be achieved by the 'melting' of the gelled aqueous phase. Therefore, preferably, the continuous gelled aqueous phase melts at a temperature in the range of 20 to 50°C. The gel melting temperature whenever referred to in this document, is measured using the following procedure: Pour a sample of the aqueous phase into a glass test tube and allow it to set fully at 5°C. Then place the tube in a water jacket connected to a programmable water bath. Place a steel ball of a diameter of about 1 mm, on the surface of the sample and depress slightly to minimize surface tension effects. Equilibrate for one hour at 25°C, or a lower temperature in case of a low melting gel, and then apply a heating regime of 0.05°C/min. The gel melting temperature is the temperature at which the ball starts to sink through the sample.

In yet another preferred embodiment of the present invention the mixture of polyol fatty acid polyester-(s) present in the fat phase of the present spread has an N-value at 37°C of at least 4%.

The presence of a mixture of polyol fatty acid polyesters having a relatively high $N_{37}$ value is beneficial as it serves the purpose of preventing anal leakage of the liquid indigestible polyol fatty acid esters present in the fat phase. Although EP 0 236 288 indicates in general terms, that this effect also occurs in the margarine systems mentioned in that publication, no indications can be derived thereof that better results can be obtained by using a mixture of polyol fatty acid polymers in spreads with water as a continuous phase. In fat-continuous spreads the presence of such a mixture of high melting polyol fatty acid polyesters would, inevitably, adversely affect the oral response of such spreads. In the spreads according to the present invention, however, such mixture may positively attribute to the mouthfeel and consistency of the product which consistency preferably is very much alike that of spreads of high fat content, such as butter and margarine.

Since the present invention is particularly concerned with products of low calorie content, the fat phase preferably consists for at least 30 wt.% of indigestible polyol fatty acid polyesters. The remainder of the fat phase preferably essentially consists of glycerides. In an even more preferred embodiment of the present invention the fat phase comprises at least 40 wt.% of indigestible polyol fatty acid polyesters and 0-60 wt.% of triglycerides. Preferably the polyol fatty acid polymer(s) in the fat phase of the present product possess an N value at 37°C of at least 7%. The N value at a particular temperature is determined after equilibration at said temperature by means of NMR, using the method described in "Fette, Seifen, Anstrichmittel" 80 - (1978) 180-186.

As defined hereinbefore polyol fatty acid polyesters may be applied of which, on average, more than 70 % of the polyol hydroxyl groups have been esterified with fatty acids. Preferably polyol fatty acid polyesters are used with higher degrees of esterification, in particular polyol fatty acid polyesters of which, on average, more than 85 % or even over 95 % of the polyol hydroxyl groups have been esterified with fatty acids.

The rheology of the present products to a large extent is determined by the nature of the gelled aqueous phase matrix which in fact confers firmness and plasticity to the product. In conventional products it is the fat matrix that essentially determines the rheology of the product. Thus, since the present products preferably have a rheology similar to margarine or butter, the aqueous phase matrix should make a similar contribution to the product's rheology as a fat matrix, i.e. the gelled aqueous phase should have a rheology similar to fat.

The rheology of fat and also of gelled aqueous systems may suitably be investigated by determining the stress-strain relation. This can be done with a series of measurements using a parallel plate "squeezing flow" geometry. The measurements are carried out using a parallel plate plastometer, wherein a block of the material to be tested is deformed between two parallel plates that move towards each other. (An apparatus that can suitably be used for this purpose is an Instron[R] apparatus). The deformation is inflicted at constant rate, preferably at a rate of deformation of 0.0167 $s^{-1}$ (i.e. 100% compression in 1 minute). Thus, if the thickness of the material to be tested is doubled, the rate at which one plate is moved towards the other is also doubled.

The corresponding stress at increasing deformation (strain) is determined by recording the force that is required to keep the rate of deformation constant while the deformation magnitude increases. A series of such measurements is carried out on a series of blocks of the material to be tested, having varying thicknesses. From this series of measurements the stress-strain relation of the material being tested is then obtained by extrapolating the results to infinite thickness. The stress Y, usually expressed in kPa, is recorded as a function of the strain Q, wherein $Q = 1n (H_o/H)$, $H_o$ indicating the thickness of the test block,

4

without any deformation, at the beginning of the measurement and H indicating the thickness of the block during the measurement while it is being squeezed between the two parallel plates.

The stress-strain relation of a particular product is usually determined at a temperature representative for the temperature at which the product is to be used. Usually for the edible dispersion this will be between about 5°C and 25°C. In practice, mostly a temperature of about 15-20°C will be adequate. But, for example, for a product that is intended to be kept in a refrigerator, a temperature of about 5°C may be more adequate. Preferably the stress-strain relation is measured at a temperature of 15°C.

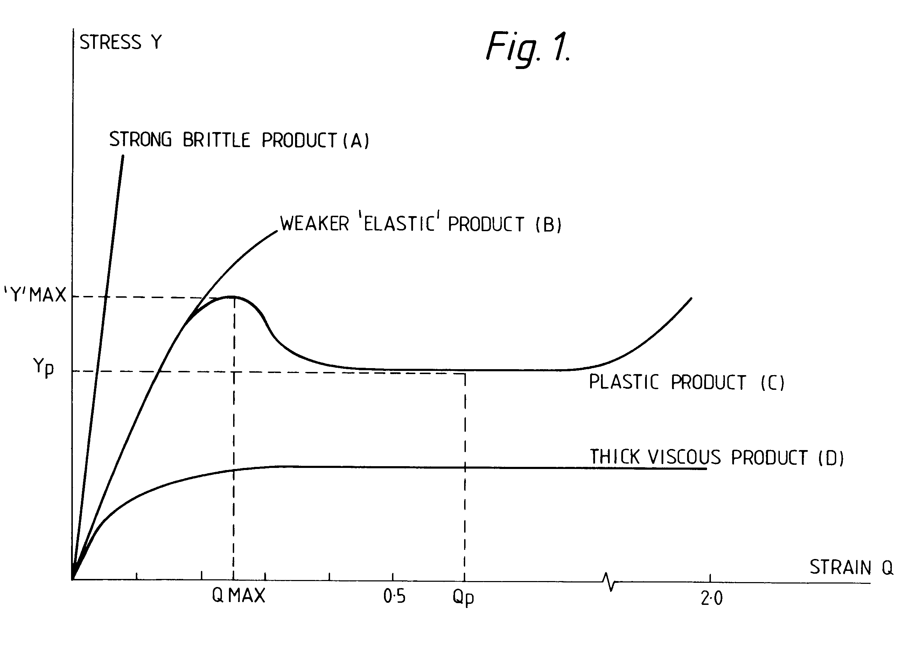

In Fig. 1 a curve (C) is represented, illustrating the typical stress-strain relation found for plastic products, such as normal spreads. Characterizing feature of a curve for a plastic product, having a desirable rheology, are the strain ($Q_{max}$), the magnitude of that maximum stress and the ratio of the socalled plastic stress ($Y_p$) and the maximum stress $Y_{max}$. In an ideal system, the curve of a plastic product shows a maximum in the stress at a relatively small deformation Q and, at somewhat larger deformation, progresses essentially horizontal where the stress remains almost constant at increasing deformation. This part of the curve at which the slope ideally is zero, is called the plastic flow region. The stress in this region is called the plastic stress. In Fig. 1 also the curves typical for the stress strain relation of strong brittle products (A), relatively weak elastic products (B) and thick, viscous fluid products (D) have been represented.

In practice, the curve of the stress-strain relation in the plastic flow region usually is not strictly horizontal. To prevent confusion about the point of the curve that determines the plastic stress, in case there is no horizontal plateau in the curve, the plastic stress is chosen to be the stress at the inflexion point. The strain at that point is indicated as $Q_p$. $Y_{max}$, $Y_p$, $Q_p$ and $Q_{max}$ have been indicated in Figure 1.

Preferably the present spreads, despite the presence of a continuous aqueous phase, have a plastic consistency and have a stress-strain relation with a maximum stress occurring at a strain ($Q_{max}$) of 0.001-2, the maximum stress at strain $Q_{max}$ ($Y_{max}$) being 0.01-100 kPa and with a ratio of the plastic stress ($Y_p$) to the maximum stress $Y_{max}$ ($Y_p/Y_{max}$) of 0.1-1. More preferably the present spreads have a stress-strain relation with $Q_{max}$ being 0.01-0.5, $Y_{max}$ being 0.3-60 kPa and with ($Y_p/Y_{max}$) being in the range of 0.2-0.95.

The fat phase of the present spreads may contain, in addition to indigestible polyol fatty acid polyesters, digestible triglycerides. Preferably the present spreads contain less than 20 wt.%, preferably less than 10 wt.% triglycerides. The spreads also can contain small amounts of colouring agents preferably β-carotene.

The present invention is illustrated by means of the following examples:

Example 1

A stable spread of good consistency, spreadability, which spread did not loose water on spreading was prepared having the following formulation:

| Ingredient | % by weight |
|---|---|
| Fat | 19.55 |
| Hymono 4404 | 0.30 |
| beta-carotene (0.4%) | 0.15 |
| Paselli SA2 | 11.60 |
| Gelatin (Geltec) | 1.60 |
| Salt | 1.40 |
| Potassium sorbate | 0.12 |
| Water to 100% pH adjusted to 5.1 with lactic acid | |

5

The composition of the fat present in the product was as follows:

| Ingredient | % by weight of fat phase |
|---|---|
| **Component A**<br>partially hardened soybean oil<br>(slip melting point 36°C) | 20 |
| **Component B**<br>sunflower oil | 30 |
| **Component C**<br>sucrose fatty acid polyester<br>(fatty acid residues derived from<br>touch-hardened soybean oil,<br>slip melting point 28°C; degree of<br>esterification over 95 %) | 40 |
| **Component D**<br>sucrose fatty acid polyester<br>(fatty acid residues derived from<br>55 % fully hardened soybean oil,<br>slip melting point 65°C, and 45 %<br>touch-hardened soybean oil, slip<br>melting point 28°C; degree of<br>esterification over 95 %) | 10 |

The product was prepared on lab-scale by means of a split stream process using 2 C-units (stirred crystallizers) provided with a cooling jacket. The fat and aqueous phase were held in separate vessels at 60°C while stirring. The proportioning pump was set to give a 20% fat emulsion at a throughput of 70 g.min$^{-1}$. The separate fat and water streams were fed to the first unit in which they were admixed at a rotation speed of 2500 rpm.

The jacket temperature of the first C-unit was 0°C and the solids content after said unit was about 1.7% on product. The second C-unit was operated at 1400 rpm and had a jacket temperature of 10°C. The solids content of the product coming from the second C-unit was 3.3% on product. The emulsion temperature of the emulsion when emerging from the first and second C-unit was 24.7°C and 19.5°C respectively.

Some physical characteristics of the product so obtained and the fat phase employed, are represented in Table 1.

Example 2

Example 1 was repeated with the exception that the fat blend used contained components A,B,C and D in a weight ratio of 30:20:40:10. Furthermore the jacket temperatures of the first C-unit was 5°C and of the second C-unit it was 12°C. The emulsion emerging from the first C-unit had a temperature of 21.0°C and a solids content of 2.1%. The emulsion emerging from the second C-unit had a temperature of 18.1°C and a solids content of 2.5%.

The product so obtained was plastic, easy spreadable and did not loose water on spreading. The product was some what softer than the product of Example 1. Some physical properties of the product are recited in Table 1.

Example 3

Example 1 was repeated with the exception that the fat blend used contained components A,B,C and D in a weight ratio of 40:10:40:10. Furthermore the jacket temperatures of the first C-unit was 10°C and of the second C-unit it was 14°C. The emulsion emerging from the first C-unit had a temperature of 25.0°C and a solids content of 1.7%. The emulsion emerging from the second C-unit had a temperature of 20.7°C and a solids content of 3.8%.

The product so obtained was plastic, easy spreadable and did not loose water on spreading. Some physical properties of the product are recited in Table 1.

TABLE 1

| Physical Property | Example 1 | Example 2 | Example 3 |
|---|---|---|---|
| $C_5$ * | 375 | 165 | 290 |
| $C_{10}$ | 340 | 120 | 225 |
| $C_{15}$ | 235 | 90 | 115 |
| $C_{20}$ | 110 | 55 | 85 |
| $N_5$ (fat phase) | 13.6 | 23.0 | 34.5 |
| $N_{20}$ | 5.5 | 10.7 | 18.7 |
| $N_{35}$ | 0.5 | 0.6 | 0.7 |
| $N_{37}$ (SPEs) | < 2.5 | < 2.5 | < 2.5 |

* The $C_t$ values represent the hardness of the spread at temperature t. The hardness was measured by means of a cone penetrometer as described in J. Am. Oil. Chem. Soc. 36 (1959), 345-348.

All three products had a conductivity that was significantly higher than 10 $\mu$S/cm.

Examples 4, 5 and 6

Example 1 was repeated, with the exception that the following formulations were prepared:

| | ex.4 | ex.5 | ex.6 |
|---|---|---|---|
| Fat phase: | 19.65% | 10% | 5% |
| Hymono 4404: | 0.30 | | |
| Beta-carotene (0.4%) | 0.05 | | |
| Paselli SA 2 | 9.60 | | |
| Gelatin | 2.40 | | |
| Sodium caseinate | 2.40 | | |
| Salt | 0.80 | | |
| Patassium sorbate | 0.08 | | |
| water | up to 100 % | | |

The composition of the fat, present in the product was: 20% SPE ($H_2$) (= compound D) and 80% sunflower oil.

| Process conditions : | |
|---|---|
| fat temperature | 60 °C |
| total throughput | 60 g/min |
| jacket temperatures | 2 °C and 15 °C resp. |

The products were stored at 5 °C for 1 week, after which an evaluation was made, using standard tests. The results are given in table 2.

Table 2

| Physical properties o/w-spreads with high viscosity aqueous phases: | | | |
|---|---|---|---|
| Hardness | ex.4 | ex.5 | ex.6 |
| $C_5$ | 155 | 125 | 150 |
| $C_{10}$ | 140 | 115 | 130 |
| $C_{15}$ | 125 | 100 | 115 |
| $C_{20}$ | 100 | 80 | 85 |
| $N_{10}$ [SPE ($H_2$)] | 77 | | |
| $N_{20}$ | 68 | | |
| $N_{30}$ | 48 | | |
| $N_{35}$ | 30 | | |
| $N_{40}$ | 14 | | |

These products spread like w/o - emulsions.

## Claims

1. Spread containing a fat phase comprising one or more indigestible polyol fatty acid polyesters derived from polyol(s) comprising at least four free hydroxyl groups, wherein more than 70% of the polyol hydroxyl groups have been esterified with fatty acid(s), and optionally conventional glyceride fats and at least 40 wt % of a continuous aqueous phase containing one or more gelling agents at a sufficiently high concentration level to gel said aqueous phase.

2. Spread according to claim 1, wherein the spread comprises from 5 to 60 wt.% of a fat phase.

3. Spread according to claim 1 or 2, wherein the aqueous phase is gelled.

4. Spread according to any one of claims 1-3, wherein the gelling agent is selected from the group consisting of: gelatin, kappa-carrageenan, iota-carrageenan, alginate, agar, gellan, pectin, gelling starch, whey protein, bovine serum protein, soy protein and microcrystalline cellulose.

5. Spread according to claim 3 or 4, wherein the continuous gelled aqueous phase melts at a temperature in the range of 20 to 50 °C.

6. Spread according to any one of claims 1-5, wherein the aqueous phase comprises a first gelling agent selected from the group consisting of: gelatin, kappa-carrageenan, iota-carrageenan, alginate, agar, gellan and pectin and in addition a second gelling selected from the group consisting of: starch, whey protein, bovine serum protein, soy protein and microcrystalline cellulose.

7. Spread according to any one of claims 1-6, wherein the mixture of polyol fatty acid polyester(s) present in the fat phase has an N value at 37 °C of at least 4%.

8. Spread according to any one of claims 1-7, wherein the fat phase consists for at least 30 wt.% of indigestible polyol fatty acid polyesters.

9. Spread according to any one of claims 1-8, wherein the spread has a stress-strain relation with a maximum stress occurring at a strain ($Q_{max}$) of 0.001-2, the maximum stress at strain $Q_{max}$ ($Y_{max}$) being 0.01-100 kPa and with a ratio of the plastic stress ($Y_p$) to the maximum stress $Y_{max}$ ($Y_p/Y_{max}$) of 0.1-1.

10. Spread according to any one of claims 1-9, wherein the spread comprises less than 20 wt.%, preferably less than 10 wt.% triglycerides.

**Patentansprüche**

1. Brotaufstrich, enthaltend eine Fettphase, die ein oder mehrere unverdauliche Polyolfettsäurepolyester, abgeleitet von einem oder mehreren Polyol(en), die mindestens vier freie Hydroxylgruppen umfassen, worin mehr als 70 % der Polyolhydroxylgruppen mit Fettsäure(n) verestert worden sind, und fakultativ übliche Glyceridfette umfaßt, und mindestens 40 Gew.-% einer kontinuierlichen wäßrigen Phase, die ein oder mehrere Geliermittel in ausreichend hoher Konzentration zum Gelieren der wäßrigen Phase enthält.

2. Brotaufstrich nach Anspruch 1, worin dieser 5 bis 60 Gew.-% einer Fettphase umfaßt.

3. Brotaufstrich nach Anspruch 1 oder 2, worin die wäßrige Phase geliert ist.

4. Brotaufstrich nach irgendeinem der Ansprüche 1 bis 3, worin das Geliermittel aus der Gruppe ausgewählt ist, die aus Gelatine, kappa-Carrageenan, iota-Carrageenan, Alginat, Agar, Gellan, Pektin, gelierender Stärke, Molkeprotein, Rinderserumprotein, Sojaprotein und mikrokristalliner Cellulose besteht.

5. Brotaufstrich nach Anspruch 3 oder 4, worin die kontinuierliche gelierte wäßrige Phase bei einer Temperatur im Bereich von 20 bis 50 °C schmilzt.

6. Brotaufstrich nach irgendeinem der Ansprüche 1 bis 5, worin die wäßrige Phase ein erstes Geliermittel, ausgewählt aus der Gruppe, bestehend aus: Gelatine, kappa-Carrageenan, iota-Carrageenan, Alginat, Agar, Gellan und Pektin, und zusätzlich ein zweites Geliermittel, ausgewählt aus der Gruppe, bestehend aus: Stärke, Molkeprotein, Rinderserumprotein, Sojaprotein und mikrokristalliner Cellulose, umfaßt.

7. Brotaufstrich nach irgendeinem der Ansprüche 1 bis 6, worin die in der Fettphase vorliegende Mischung von Polyolfettsäurepolyester(n) einen N-Wert bei 37 °C von mindestens 4 % hat.

8. Brotaufstrich nach irgendeinem der Ansprüche 1 bis 7, worin die Fettphase aus mindestens 30 Gew.-% unverdaulichen Polyolfettsäurepolyestern besteht.

9. Brotaufstrich nach irgendeinem der Ansprüche 1 bis 8, worin der Brotaufstrich eine Spannungs-Dehnungs-Beziehung mit einer bei einer Dehnung ($Q_{max}$) von 0,001 bis 2 auftretenden maximalen Spannung hat, wobei die maximale Spannung ($Y_{max}$) bei der Dehnung $Q_{max}$ 0,01 bis 100 kPa beträgt und das Verhältnis der plastischen Spannung ($Y_p$) zur maximalen Spannung $Y_{max}$ ($Y_p/Y_{max}$) 0,1 bis 1 beträgt.

10. Brotaufstrich nach irgendeinem der Ansprüche 1 bis 9, worin dieser weniger als 20 Gew.-%, vorzugsweise weniger als 10 Gew.-%, Triglyceride umfaßt.

**Revendications**

1. Produit à tartiner contenant une phase grasse comprenant un ou plusieurs polyesters d'acides gras et de polyol non digestibles dérivés de polyol(s) comprenant au moins quatre groupes hydroxyles libres, dans lequel plus de 70 % des groupes hydroxyles de polyols ont été estérifiés avec un (des) acide(s) gras, et de façon optionnelle des matières grasses glycérides traditionnelles et au moins 40 % en masse d'une phase aqueuse continue contenant un ou plusieurs agents gélifiants à un niveau de concentration suffisamment élevé pour gélifier ladite phase aqueuse.

2. Un produit à tartiner selon la revendication 1, dans lequel le produit à tartiner comprend de 5 à 60 % en masse d'une phase grasse.

3. Un produit à tartiner selon la revendication 1 ou 2, dans lequel la phase aqueuse est gélifiée.

4. Un produit à tartiner selon l'une des revendications 1 à 3, dans lequel l'agent gélifiant est sélectionné à partir du groupe composé de : la gélatine, le kappa-carragheennane, le iota-carragheennane, l'alginate, la gélose, le gélane, la pectine, l'amidon gélifiant, la protéine de lactosérum, la protéine de sérum de bovin, la protéine de soja et la cellulose micro-cristalline.

5. Un produit à tartiner selon la revendication 3 ou 4, dans lequel la phase aqueuse gélifiée continue fond à une température comprise dans la gamme allant de 20 à 50°C.

6. Un produit à tartiner selon l'une des revendications 1 à 5, dans lequel la phase aqueuse comprend un premier agent gélifiant sélectionné dans le groupe composé de : la gélatine, le kappa-carragheennane, le iota-carragheennane, l'alginate, la gélose, le gélane et la pectine et en outre, un second gélifiant sélectionné à partir du groupe composé de : l'amidon, la protéine de lactosérum, la protéine de sérum de bovin, la protéine de soja et la cellulose micro-cristalline.

7. Un produit à tartiner selon l'une des revendications 1 à 6, dans lequel le mélange de polyester(s) d'acide gras et de polyol présent dans la phase grasse a une valeur N d'au moins 4 % à 37°C.

8. Un produit à tartiner selon l'une des revendications 1 à 7, dans lequel la phase grasse est composée d'au moins 30 % de polyesters d'acide gras et de polyol non digestibles.

9. Un produit à tartiner selon l'une des revendications 1 à 8, dans lequel le produit à tartiner a une relation tension/fatigue, la tension maximum se produisant à une fatigue ($Q_{max}$) de 0,001-2, la tension maximum à la fatigue $Q_{max}$ ($Y_{max}$) étant de 0,01 - 100 kPa, avec un rapport Tension plastique ($Y_p$)/Tension maximum ($Y_{max}$) ($Y_p/Y_{max}$) de 0,1 à 1.

10. Un produit à tartiner selon l'une des revendications 1 à 9, dans lequel le produit à tartiner comprend moins de 20 % en masse, de préférence moins de 10% en masse de triglycérides.

Fig. 1.

STRESS Y

STRONG BRITTLE PRODUCT (A)

WEAKER 'ELASTIC' PRODUCT (B)

'Y' MAX

Yp

PLASTIC PRODUCT (C)

THICK VISCOUS PRODUCT (D)

STRAIN Q

Q MAX        0·5    Qp              2·0

EP 0 379 747 B1